# EUROPEAN PATENT APPLICATION

(11) **EP 4 336 477 A1**
(43) Date of publication of application: **13.03.2024**
(21) Application number: 22799116.3
(22) Date of filing: 04.05.2022
(51) Int. Cl.: G09B 17/00, G09B 19/00, G09B 5/02, G06Q 50/20, G06F 40/205, G06F 16/33, G06F 16/31, G06F 16/35

(54) **METHOD FOR GUIDING READING AND WRITING SKILL IMPROVEMENT, AND DEVICE THEREFOR**

(30) Priority: 07.05.2021 KR 20210059282
(71) Applicant: Kim, Sangijn, Seoul 04740 (KR); Kim, Sehyun, Seoul 04740 (KR)
(72) Inventor: Kim, Sangijn, Seoul 04740 (KR); Kim, Sehyun, Seoul 04740 (KR)
(74) Representative: Michalski Hüttermann & Partner Patentanwälte mbB
(86) International application number: PCT/KR2022/006405
(87) International publication number: WO 2022/235073

(57) **Abstract**

The present invention relates to a method and apparatus for guiding improvements of abilities for reading comprehension and composition of a text, and the method and apparatus defining basic components of a sentence, modeling the types of structures for a single sentence or connection structures for at least two or more sentences, then storing the components and the types in advance, and applying each of the modeled types to reading comprehension and composition of a text so that a user learns the styles of logic deployment methods including deduction, induction and dialectics, and thus guiding a user to improve abilities for the reading and writing of a text.

## Description

### TECHNICAL FIELD

The present invention relates to a method and apparatus for guiding improvements of abilities for reading and writing of a text, and more specifically, the method and apparatus defining basic components of a sentence, modeling the types of structures for a single sentence or connection structures for at least two or more sentences, then storing the components and the types in advance, and applying each of the modeled types to reading and writing of a text so that a user learns the styles of logic deployment methods including deduction, induction and dialectics, and thus guiding a user to improve abilities for the reading and writing of a text.

### BACKGROUND ART

Humans are social creatures who spend their entire lives interacting and communicating closely with each other through speaking, listening, and other forms of communication. It's no exaggeration to say that how well a person communicates determines how well they live their lives.

However, the main ways humans communicate with others are not only through speaking and listening, but also through reading and writing. However, the main activity of reading is comprehension, and the main activity of writing is composition. Through reading, one can recognize overall social flows and acquire knowledges. Through writing, one can accurately and effectively convey one's thought to others.

However, due to the lack of solid principles and standards for reading comprehension and writing composition, it is often difficult to clearly transfer one's intention through writing. And it is also common to encounter difficulties or misunderstandings due to the inability to accurately recognize what the other person has written.

In addition, since the educational programs for reading and writing that have been developed and used so far are national language education programs for elementary, middle, and high schools and simply consist of reading and discussion styles, there is no systematic evaluation method or system for improving the ability to accurately read and compose a text.

In addition, while various gifted and talented programs for subjects such as science, mathematics etc. are composed and in operation, there is no program or assessment tool for gifted and talented education for a field of a national language including reading comprehension and writing composition of a text.

Therefore, the present invention presents a method for applying a type of a structure of a sentence or types of connection structures for at least two or more sentences, which are modeled and stored in advance to reading and writing, so that a user can learn styles of logic deployment methods including deduction, induction, and dialectics, grasp the topic of a text and logically write a text by himself, and thereby improving the reading and writing skills.

Hereinafter, the prior art that exists in the technical field of the present invention is briefly described, and then the descriptions of the technical details that the present disclosure seeks to accomplish differently compared to the prior art are followed.

First, in KR 1058405 B1 (August 23, 2011), a prior art related to an essay learning support system and an essay learning support method using a logic map are disclosed. The system and method using the logic map comprises a logic map server including an input window display module configured to output a plurality of text input boxes for step-by-step input of text to a user terminal for implementing the logic map with logical structures, a text input module that receives text inputted in the text input boxes via the Internet according to logical steps to implement the logic map, and an essay statement generation module that generates an essay statement by combining the text in the order of the logical steps.

The prior art discloses a system and method for enabling a user to perform an essay training of implementing a logic map by entering texts in a text input box step by step according to a logical structure. Since the texts implemented by the logic map can be combined and output as a single directional text, it is effective for training in writing essays by logical thinking. In other words, the prior disclosure describes a system and method that can improve logical writing skill and logical expression skill for logical conversation/discussion.

However, there are significant structural differences between the prior disclosure and the present invention, in that the present invention defines the basic components of a sentence, constructs a map by modeling the types of connection structures between sentences based on the defined basic components of the sentence, and applies the map to reading and writing so that a user learns the styles of logic deployment methods including deduction, induction, and dialectics.

In addition, in KR 10-2010-0111456 A (October 15, 2010), another prior art relating to a writing guidance method and system is disclosed. The method and system comprise determining a topic of a writing in a writing guidance system, providing an example writing to a learner in the writing guidance system, wherein the example writing corresponds to the topic of the writing and includes one or more empty word spaces, and receiving input for words to be entered into the one or more empty word spaces from the learner in the writing guidance system.

In other words, the prior disclosure describes a method and system that makes it easier for learners, even if they are new to writing or unfamiliar with writing, to learn how to compose the overall structure of the writing or deploy logic for the writing while practicing the writing.

However, there are significant structural differences between the prior disclosure and the present invention, in that the present invention defines the basic components of a sentence, constructs a map by modeling the types of connection structures between sentences based on the defined basic components of the sentence, and applies the map to reading and writing so that a user learns the styles of logic deployment methods including deduction, induction, and dialectics.

### DETAILED DESCRIPTION OF THE INVENTION-

### Technical problem

The present disclosure is proposed to solve the problems described above, and it is an objective to provide a method and apparatus for guiding improvements of reading and writing abilities of a user.

It is another objective of the present disclosure to provide a method and apparatus for defining the basic components of a sentence and constructing a map by modeling the types of a structure for a sentence or connection structures for at least two or more sentences through the defined basic components of the sentence, and thereby improving abilities for reading comprehension and writing composition by applying the constructed map to the reading and writing.

Furthermore, it is another objective of the present disclosure to provide a method and apparatus for learning styles of logic deployment methods by inferences including deduction, induction, and dialectics, for a descriptive writing for delivering information or an editorial writing for persuading with argument, by using each of the types modeled and stored in advance.

Furthermore, it is another objective of the present disclosure to provide a method and apparatus for enabling a user to learn reading comprehension and writing composition through maps modeled differently for each level set based on age or ability, and thus enabling each user to improve his reading comprehension and writing composition abilities by assessing or checking the reading and writing at his own level by himself.

It is another objective of the present disclosure to provide a method and apparatus for objectively measuring the degree of improvements of reading comprehension and writing composition abilities for a text of a user through a verification tool.

It is another objective of the present disclosure to provide a method and apparatus for naturally improving reading comprehension and writing composition abilities of a text through interactive checking of the text.

It is another objective of the present disclosure to provide a method and apparatus for assisting a user in developing the insight into a text, thereby enabling the user to identify a topic and compose a logically sound writing on his own without any assistance of others.

### Problem Solving Means

According to an embodiment of the present invention, it is characterized in that an apparatus for guiding improvements of reading or writing abilities comprises a processor, wherein the processor is configured to divide and analyze a text inputted by a user into a superstructure and a substructure according to types of a structure for a single sentence, or connection structures for at least one or more than two sentences in the text, and guide the reading or the writing for the text.

It is characterized in that the processor is further configured to sequentially identify to a last sentence whether there exists a matched type by comparing a keyword between each of sentences with each type of the connection structures for the at least one or more than two sentences, analyze the sentence as the superstructure, if the matched type exists, and the sentence as an additional model of the superstructure or the substructure, if the matched type does not exist, and thereby guide the reading or the writing for the text.

It is characterized in that the processor comprises a type modeling part configured to model the types of the structure of the single sentence or the connection structures for the at least more than two sentences and store the modeled types in advance; and a sentence analysis map construction part configured to construct a sentence analysis map for analyzing the text according to each of the modeled types.

It is characterized in that the processor further comprises a reading processing part configured to analyze the text according to each of the modeled types and the sentence analysis map, and provide a result of the analysis to a user terminal, and wherein the reading processing part comprises: a text analysis part configured to analyze the text according to each of the modeled types and the sentence analysis map; and a guide information provision part configured to provide guide information to the user terminal along with the original text, and thereby enable a user to correct an error of wrong reading comprehension and practice accurate reading comprehension through learning of styles for logic deployment methods including deduction, induction, and dialectics for the text.

It is characterized in that the text analysis part is further configured to read the text and divide the read text into each of sentences, divide each of the divided sentences into unit components and extract a keyword from the unit components, identify sequentially to the last sentence whether there exists the matched type by comparing the keyword between each of the extracted sentences with each of the modeled types, generate an analysis result comprising a superstructure comprising each type of a 1-stage sentence structure model, an additional model, or a combination thereof, a substructure, or a combination thereof if the matched type does not exist in the result of the identification, generate an analysis result for the superstructure comprising each type of a 2-stage sentence structure model or a 3-stage sentence structure model if the matched type exists in the result of the identification, and thereby analyze the reading for the text by dividing the text into the superstructure and the substructure.

It is characterized in that the processor further comprises a writing processing part configured to analyze the writing content of the text composed by the user according to each of the modeled types and the sentence analysis map, and provide the analyzed result to a user terminal, and wherein the writing processing part comprises: a writing analyzing part configured to analyze the text received from the user terminal according to each of the modeled types and the sentence analysis map, and a guide information provision part configured to generate guide information related to the text based on the analyzed result, provide the generated guide information to the user terminal, and thus enable the user to practice the writing through modifying and rewriting of the text.

It is characterized in that the writing analyzing part is further configured to read the text received from the user terminal and divide the read text into each of sentences, divide each of the divided sentences into unit components and extract a keyword between each of the sentences, compare the keyword between each of the extracted sentences with each of the modeled types, and identify sequentially to the last sentence whether there exists a matched type, generate an analysis result comprising a superstructure comprising each type of a 1-stage sentence structure model, an additional model, or a combination thereof, a substructure, or a combination thereof if the matched type does not exist in the result of the identification, generate an analysis result for the superstructure comprising each type of 2-stage sentence structure model or 3-stage sentence structure model if the matched type exists in the result of the identification, and thereby analyzing the writing for the text by dividing the text into the superstructure and the substructure.

It is characterized in that the type modeling part is further configured to model the types of the structure of the single sentence or the connection structures for the at least more than two sentences into the sentence structure model and the additional model, and store the models in advance, wherein the sentence structure model is modeled and stored with 14 types of models, in which there are: 1 type in a 1-stage sentence text, 4 types in which a progress type linking word (i.e., conjunction) comprising 'by the way' is connected between each of the sentences in the 2-stage sentence text, 3 types in which a reverse type linking word comprising 'but' is connected between each of the sentences in the 2-stage sentence text, 2 types in which a conclusion type linking word comprising 'therefore' is connected between each of the sentences in the 2-stage sentence text, 2 types in which the progress type linking word is connected between a first sentence and a second sentence and a conclusion type linking word is connected between a second sentence and a third sentence in the 3-stage sentence text, and 2 types in which the reverse type linking word is connected between a first sentence and a second sentence and the conclusion type linking word is connected between a second sentence and a third sentence in the 3-stage sentence text, by referring to the sentence analysis model comprising a subject in a 1-stage sentence text, the progress type, the reverse type, and the conclusion type in the 2-stage sentence text, the progress type and the conclusion type in the 3-stage sentence text, and the reverse type and the conclusion type in the 3-stage sentence text; and wherein the additional model is modeled and stored with 2 types of models, in which there are one type in which a linking word which is not included in the sentence structure model connects a sentence for backing up to another sentence and the other type in which a content irrelevant to the sentence structure model is added to a sentence.

Furthermore, according to another embodiment of the present disclosure, it is characterized in that a method for guiding improvements of reading comprehension or writing composition abilities comprises, by a processor, dividing and analyzing a text inputted by a user into a superstructure and a substructure according to types of a structure for a single sentence, or connection structures for at least one or more than two sentences in the text; and by a processor, guiding the reading or the writing for the text.

It is characterized in that the method further comprises, by the processor, sequentially identifying to a last sentence whether there exists a matched type by comparing a keyword between each of sentences with each type of the connection structures for the at least one or more than two sentences, and by the processor, analyzing the sentence as the superstructure, if the matched type exists, and the sentence as an additional model of the superstructure or the substructure, if the matched type does not exist, and thereby guiding the reading or the writing for the text.

It is characterized in that the method further comprises, by the processor, modeling the types of the structure of the single sentence or the connection structures for the at least more than two sentences and store the modeled types in advance; and by the processor, constructing a sentence analysis map for analyzing the text according to each of the modeled types.

It is characterized in that the method further comprises, by the processor, processing the reading by analyzing the text according to each of the modeled types and the sentence analysis map, and providing a result of the analysis to a user terminal, and wherein the processing of the reading comprises: analyzing the text according to each of the modeled types and the sentence analysis map; and providing guide information to the user terminal along with the original text, and thereby enabling a user to correct an error of wrong reading comprehension and practice accurate reading comprehension through learning of styles for logic deployment methods including deduction, induction, and dialectics for the text.

It is characterized in that the analyzing of the text further comprises reading the text and dividing the read text into each of sentences, dividing each of the divided sentences into unit components and extracting a keyword from the unit components, identifying sequentially to the last sentence whether there exists the matched type by comparing the keyword between each of the extracted sentences with each of the modeled types, generating an analysis result comprising a superstructure comprising each type of a 1-stage sentence structure model, an additional model, or a combination thereof, a substructure, or a combination thereof if the matched type does not exist in the result of the identification, generating an analysis result for the superstructure comprising each type of a 2-stage sentence structure model or a 3-stage sentence structure model if the matched type exists in the result of the identification, and thereby analyzing the reading for the text by dividing the text into the superstructure and the substructure.

It is characterized in that the method further comprises, by the processor, processing the writing by analyzing the writing content of the text composed by the user according to each of the modeled types and the sentence analysis map, and providing the analyzed result to a user terminal, wherein the processing of the writing further comprises: analyzing the text received from the user terminal according to each of the modeled types and the sentence analysis map, and generating guide information related to the text based on the analyzed result, providing the generated guide information to the user terminal, and thus enabling the user to practice the writing through modifying and rewriting of the text.

It is characterized in that the analyzing of the writing composition further comprises reading the text received from the user terminal and dividing the read text into each of sentences, dividing each of the divided sentences into unit components and extract a keyword between each of the sentences, comparing the keyword between each of the extracted sentences with each of the modeled types, and identify sequentially to the last sentence whether there exists a matched type, generating an analysis result comprising a superstructure comprising each type of a 1-stage sentence structure model, an additional model, or a combination thereof, a substructure, or a combination thereof if the matched type does not exist in the result of the identification, generating an analysis result for the superstructure comprising each type of 2-stage sentence structure model or 3-stage sentence structure model if the matched type exists in the result of the identification, and thereby analyzing the writing for the text by dividing the text into the superstructure and the substructure.

### Effects of the Invention

As described above, according to the method and apparatus for guiding improvements of reading comprehension and writing composition abilities in accordance with the present disclosure, the method and apparatus are configured to construct a map by modeling types of a structure for a single sentence or connection structures for at least two or more sentences, applying the constructed map to reading comprehension and writing composition of a text input by a user, and letting a user naturally learn styles of logic deployment methods including deduction, induction, and dialectics, and thereby it is effective to let a user to identify a topic and produce logical writing composition by himself without help of others and greatly improve the reading comprehension and writing composition abilities through the present disclosure.

Moreover, since the method and apparatus according to the present disclosure supports the learning of reading comprehension and writing composition through the map modeled at different levels set based on age or ability, it is effective of the present disclosure to let each user to improve his reading comprehension and writing composition abilities by assessing or checking the reading comprehension and writing composition according to his own level, and to naturally achieve his learning goal through interactive checking of sentence in the text.

### BRIEF DESCRIPTION OF THE DRAWINGS-

FIG. 1 is a brief conceptual diagram illustrating a configuration of an overall system including an apparatus for guiding improvements of reading comprehension and writing composition abilities in accordance with one embodiment of the present disclosure.
FIG. 2 is a drawing for illustrating a program structure map for use in an apparatus for guiding improvements of abilities for reading comprehension and writing composition in accordance with one embodiment of the present disclosure.
FIG. 3 is a drawing illustrating an example of classifying each type of sentence structure model of a program structure map according to a sentence analysis model applied to the present disclosure.
FIG. 4 is a drawing illustrating an example of a sentence analysis model used when constructing a sentence structure model in accordance with the present disclosure.
FIG. 5 is a drawing illustrating an example of an additional model of a program structure map applied to the present disclosure.
FIG. 6 is a block diagram specifically illustrating a configuration of an apparatus for guiding improvements of reading comprehension and writing composition abilities according to one embodiment of the present disclosure.
FIG. 7 is a detailed block diagram depicting the configuration of the type modeling part according to an embodiment of the present disclosure.
FIG. 8 is a block diagram illustrating in detail a configuration of a reading processing part according to one embodiment of the present disclosure.
FIG. 9 shows an example of an original text and its analysis result provided to a user terminal performing a reading comprehension, which are applied to the present disclosure.
FIG. 10 is a detailed block diagram illustrating a configuration of a writing processing part according to one embodiment of the present disclosure.
FIG. 11 is a drawing showing examples for a topic provided to a user terminal and an analysis result of a text composed by a user according to the topic, which are applied to the present disclosure.
FIG. 12 is a drawing illustrating an example of predicting each type of the sentence structure model using artificial intelligence applied to the present invention when guiding improvements of abilities for reading comprehension or writing composition.
FIG. 13 is a flowchart illustrating a process of building a program structure map used in an apparatus for guiding improvements of reading comprehension and writing composition abilities according to one embodiment of the present disclosure.
FIG. 14 is a flowchart illustrating an operational process of a method for guiding improvements of reading comprehension and writing composition abilities according to one embodiment of the present disclosure.
FIG. 15 is a flowchart illustrating in detail an analysis process for reading comprehension and writing composition according to one embodiment of the present disclosure.
FIG. 16 is a diagram illustrating a hardware structure of an apparatus for guiding improvements of reading comprehension and writing composition abilities according to one embodiment of the present disclosure.

### Best Form for Implementation of the Invention

Hereinafter, preferred embodiments of a method and apparatus for guiding improvements of reading comprehension and writing composition abilities of the present disclosure are described in detail with reference to the accompanying drawings. The identical reference numerals in the drawings indicate the same components. Furthermore, specific structural or functional descriptions regarding the preferred embodiments of the present disclosure are only provided for the purpose of illustratively explaining the embodiments according to the present disclosure. Unless otherwise defined, all terms used herein, including technical or scientific terminologies, have the same meanings as commonly understood by those ordinary skilled in the technical field to which the present disclosure pertains. Terms such as those defined in commonly used dictionaries, should be interpreted to have the meanings consistent with their meanings in the context of the relevant art, and it is desirable not to interpret the terms in an idealized or overly formal sense unless explicitly defined in this specification.

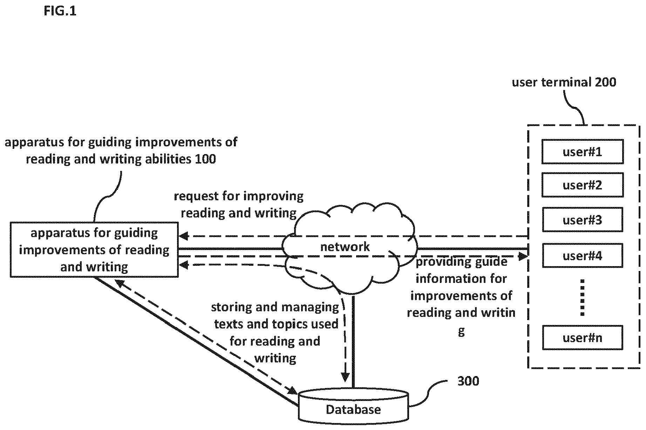

FIG. 1 is a brief conceptual diagram illustrating a configuration of an overall system including an apparatus for guiding improvements of reading comprehension and writing composition abilities in accordance with one embodiment of the present invention.

As shown in FIG. 1, the overall system comprises an apparatus for guiding improvements of reading and writing abilities 100 (hereinafter referred to as an apparatus for guiding improvements of reading and writing) according to the present invention comprises a plurality of user terminals 200 and a database 300.

The apparatus for guiding improvements of reading and writing 100 is a server computer operated by a business operator that provides a language-related reading comprehension and writing composition learning program for anyone, such as toddlers, students, or adults.

Herein, the language used in the reading comprehension and writing composition learning program provided by the present disclosure is described using Korean as an example, but it is disclosed that it can be expanded and applied to various languages such as English, Japanese, Chinese, and others, etc. without being limited thereto.

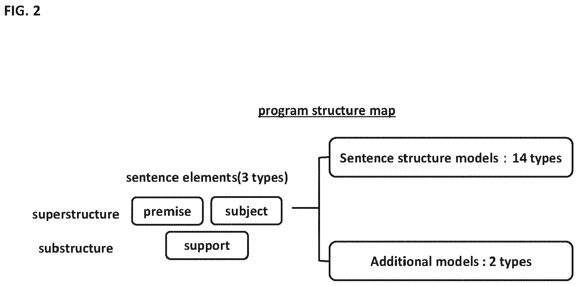

The apparatus for guiding improvements of reading comprehension and writing composition 100 is configured to define the basic components of a single sentence, model the types of structure for the single sentence or connection structures for at least two or more sentences based on the defined basic components of the sentence, construct a map by using the modeled types, for enabling each user to improve the reading comprehension and writing composition abilities, and store the constructed map(i.e., a program structure map) in the database 300. A description of the program structure map applied to the present invention is described in more detail in FIGS. 2 through 5.

In addition, the apparatus for guiding improvements of reading comprehension and writing composition 100 is configured to store the map constructed by modeling the types of structure for the single sentence or the connection structures for at least two or more sentences in the database 300, then enables each user to learn styles of logic deployment methods by an inference including deduction, induction, and dialectics by applying the constructed map to reading comprehension and writing composition, thereby improving abilities for the reading comprehension and the writing composition.

In other words, the apparatus for guiding improvements of reading comprehension and writing composition 100 is configured to analyze by dividing a predetermined text required for reading comprehension and a writing content of a text composed (i.e., writing composition) by a user into a superstructure and substructure according to each of the types modeled in the constructed map, provide the analyzed information to a user terminal 200, and thus take a role to guide for each user to perform reading or writing while each user is recognizing the logical structure of the text.

As a result, each user naturally improves abilities(skills) of the reading comprehension and writing composition of a text through the interactive guidance by the apparatus for guiding improvements of reading comprehension and writing composition 100. Moreover, each user develops insight into sentences and identifies a topic of a text and completes logically composed writing on his own without help of others.

On the other hand, the apparatus for guiding improvements of reading comprehension and writing composition 100 is configured to organize groups of users performing reading or writing of a text into a plurality of levels based on age and ability, model, and store different types of connection structures between sentences for each of the organized groups. In other words, by modeling and storing different types of connection structure between sentences for each level as a map, each user improves his ability through the learning of reading comprehension or writing composition based on his appropriate level.

The apparatus for guiding improvements of reading comprehension and writing composition 100 is configured to objectively measure the degree of improvements of each ability of the users to reading comprehension and writing composition of a text, by evaluating/assessing the degree of improvements of the reading comprehension and writing composition skills of texts according to a predetermined period.

In this case, the evaluation (i.e., assessment) is carried out in the way that the apparatus presents questions related to reading comprehension or writing composition of a text through an application program installed on the user terminal 200 or a user terminal 200 accessed via a Web, and the answers returned by each user identifying the questions are assigned to an expert to be graded.

The user terminal 200 is a communication device that uses wired or wireless Internet such as a smartphone or tablet owned by the user and performs a login to the apparatus for guiding improvements of reading comprehension and writing composition 100 through network connection according to the user's operation.

Further, the user terminal 200 requests a practice of reading comprehension and writing composition to the apparatus for guiding improvements of reading comprehension and writing composition 100 in response to the user's operation, receives data for improvements of reading comprehension and writing composition provided by the apparatus for guiding improvements of reading comprehension and writing composition 100 in response to the request, and thus enables the user to perform the practice of reading comprehension or writing composition. In this case, the practice of reading comprehension or writing composition is carried out through an application program installed on the user terminal 200, or by directly accessing the apparatus for guiding improvements of reading comprehension and writing composition 100 based on the Web.

For example, when a user requests a reading comprehension of a text, the user performs the practice for reading comprehension with the user terminal 200, which receives a guiding text including a descriptive writing for delivering information or an editorial writing for arguing with demonstration, and guiding information analyzing each sentence of the text according to each type modeled in advance, from the apparatus for guiding improvements of reading comprehension and writing composition 100.

Furthermore, when a user requests a writing composition of a text, the user terminal 200 is configured to receive a specific topic for writing composition from the apparatus for guiding improvements of reading comprehension and writing composition 100 and transmit the content of the text composed by the user according to the received specific topic to the apparatus for guiding improvements of reading comprehension and writing composition 100. Subsequently, the user terminal 200 is configured to receive the information of analyzing the writing content of the text composed by the user according to each type modeled in advance (e.g., commented data indicating whether the writing content written by the user is suitable or not suitable for the rules based on the modeled types) from the apparatus for guiding improvements of reading comprehension and writing composition 100, and provide the user to perform a practice for writing composition of the text by checking whether the writing content of the text composed by the user is suitable or which part is lacking.

The database 300 is configured to store and manage the information about a map constructed by modeling types of a structure for a single sentence or connection structures for at least more than two sentences based on the basic components of the sentences.

The database 300 is also configured to store and manage the information about texts including descriptive writing and editorial writing for use in learning of reading comprehension and topics for use in learning of writing composition. Wherein the texts and topics are provided by a research institute related to education, an organization related to education, or a question bank related to a text, and classified and stored according to each level.

In addition, the database 300 is configured to store and manage membership information for each user and learning information related to reading comprehension and writing composition for each user.

Meanwhile, a map previously constructed by modeling a plurality of types for connection structures between sentences for guiding reading comprehension and writing composition provided in the present invention is described in detail with reference to FIGS. 2 to 5.

FIG. 2 is a drawing for illustrating a program structure map for use in an apparatus for guiding improvements of abilities for reading comprehension and writing composition in accordance with one embodiment of the present disclosure.

As shown in Fig. 2, for all texts, sentences come together to make a paragraph, and paragraphs come together to make a text. By the way, one sentence and another sentence are connected with a logical structure, one paragraph and another paragraph are connected with a logical structure, and a text is composed of a logical structure. In addition, in all texts, non-literary texts are generally divided into two types: a descriptive writing for delivering information or an editorial writing for arguing with demonstration, and three styles of logical development methods: deductive, inductive, and dialectical reasoning.

In the present invention, all these sentences are defined by 3 elements: a superstructure of a premise or a subject, and a substructure of a support. In addition, a map is constructed by modeling 14 types of sentence structure models and 2 types of additional models, based on the defined sentence elements.

In this case, the substructure also has 14 types of sentence structure models and 2 types of additional models, same as the superstructure. In other words, just same as the superstructure to which the premise or the subject connects, the substructure of the support to the premise or the subject of the superstructure also has each type of sentence structure models of connecting to each other within the substructure.

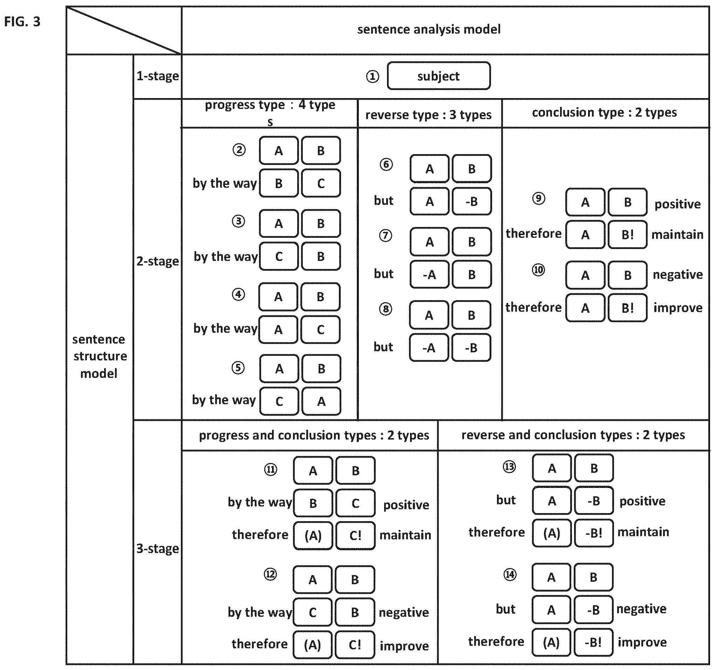

FIG. 3 is a drawing illustrating an example of classifying each type of sentence structure model of a program structure map according to a sentence analysis model applied to the present disclosure.

As shown in FIG. 3, in the present invention, a map is constructed and stored in the database 300 by modeling through dividing the sentence structure models into 14 types of connection structures between sentences including 1 type of a 1-stage sentence text, 9 types of a 2-stage sentence text, 4 types of a 3-stage sentence text, with reference to the sentence analysis model. Here, the modeling is to create a particular model defined by the present invention, and the model is defined and identified by a data structure or a template.

Wherein, the sentence analysis model comprises a subject in a 1-stage sentence text, a progress type linking word, a reverse type linking word, and a conclusion type linking word in a 2-stage sentence text, a progress type linking word and a conclusion type linking word in a 3-stage sentence text, a reverse type linking word and a conclusion type linking word in a 3-stage sentence text, or a combination thereof.

For example, for a 1-stage sentence of a text, the sentence structure model is modeled and stored as 1 type of a subject.

In addition, in the case of a 2-stage sentence text, the sentence structure model is modeled and stored as a total of 9 types of models comprising 4 types for connecting a linking word of 'by the way' between sentences, 3 types for connecting a linking word of 'but' between sentences, and 2 types for connecting a linking word of 'therefore' between sentences. Wherein, A, B, and C in the drawing (FIG. 3), indicate keywords or contexts extracted from each of sentences, the '-' mark indicates a sentence with the opposite concept to the keyword or context of the previous sentence, and the '!' mark indicates a sentence with a keyword or context that maintains the meaning of the sentence if the previous sentence has a positive meaning, or a sentence with a keyword or context that improves a negative meaning of the sentence if the previous sentence has a negative meaning.

For example, if the keywords A and B are extracted from each of parts in a first sentence, and the keywords B and C are extracted from each of parts in a second sentence, a type that a progress type linking word of 'by the way' is connected between sentences is modeled and stored. In addition, if the keywords A and B are extracted from each of parts in a first sentence, and the keywords A and -B are extracted from each of parts in a second sentence, a type that a reverse type linking word of 'but' is connected between sentences is modeled and stored. Furthermore, if the keywords A and B (positive) are extracted from each of parts in a first sentence, and the keywords A and B! (maintain) are extracted from each of parts in a second sentence, a type that a conclusion type linking word of 'therefore' is connected between sentences is modeled and stored.

In addition, in case of a 3-stage sentence text, the sentence structure model is modeled and stored as total 4 types models comprising 2 types for sequentially connecting a progress type and conclusion type linking words of 'by the way' and `therefore' between a first and a second sentences, and between a second and a third sentences; and 2 types of sequentially connecting a reverse type and conclusion type linking words of 'but' and 'therefore' between a first and a second sentences, and between a second and a third sentences.

For example, if the keywords A, B are extracted from each of parts in a first sentence, the keywords B, C (positive) are extracted from each of parts in a second sentence, and the keywords (A), (C!) (maintain) are extracted from each of parts in a third sentence, then a type that a progress type linking word of 'by the way', and a conclusion type linking word of 'therefore' are connected in sequence is modeled and stored. In addition, if the keywords A, B are extracted from each of parts in a first sentence, the keywords A, -B (negative) are extracted from each of parts in a second sentence, and the keywords (A), (-B!) (improve) are extracted from each of parts in a third sentence, then a type that a reverse type linking word 'but', and a conclusion type linking word of 'therefore' are connected in sequence is modeled and stored.

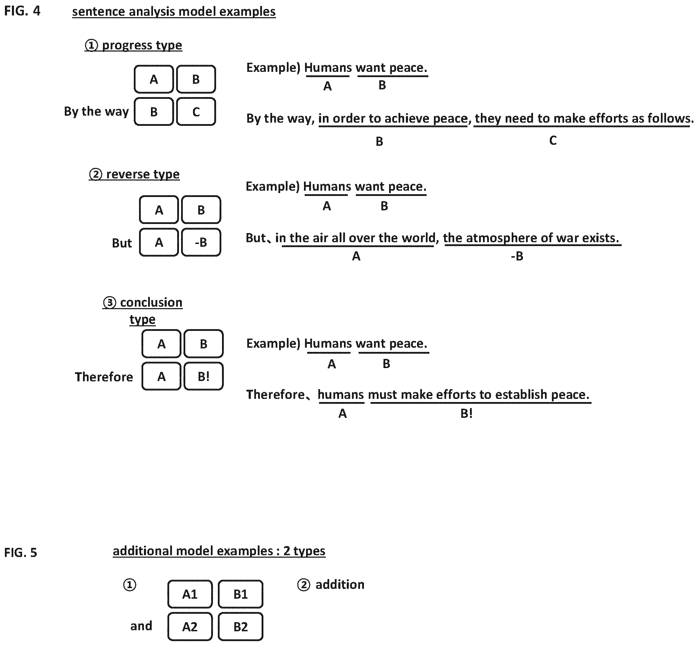

FIG. 4 is a drawing illustrating an example of a sentence analysis model used when constructing a sentence structure model in accordance with the present disclosure.

As shown in FIG. 4, the sentence structure model which is modeled and stored to 14 types according to 1-stage sentence text, 2-stage sentence text and 3-stage sentence text uses a sentence analysis model comprising a progress type linking word of 'by the way', a reverse type linking word of 'but', a conclusion type linking word of 'therefore', or a combination thereof, in case of a 2-stage sentence text or a 3-stage sentence text.

For example, in case of example sentences of `Humans want peace. By the way, in order to achieve peace, they need to make efforts as follows.', the first sentence is divided into two parts, 'Humans' and `want peace', and the second sentence into two parts, `In order to achieve peace' and `they need to make efforts as follows.', in an embodiment of the present disclosure. Then, the keywords are extracted from each of the parts and the forms of A, B and B, C are identified for the first sentence and the second sentence, whereby a type that a progress type linking word of 'by the way' is connected between sentences in a 2-stage sentence text is modeled and stored.

FIG. 5 is a drawing illustrating an example of an additional model of a program structure map applied to the present disclosure.

As shown in FIG. 5, there are 2 types for a linking word not mentioned in the previous sentence structure model and a content not related to the previous sentence structure model in the additional model.

For example, there are 2 types: a type that a first sentence of two sentences is developed in the form of A1 and B 1, then a linking word of 'and' is followed, and then a second sentence is developed in the form of A2 and B2 (where A1 and A2, and B1 and B2 are related to each other), and the other type of 'addition' which is developed in the content that is unrelated to the previously described sentence structure model.

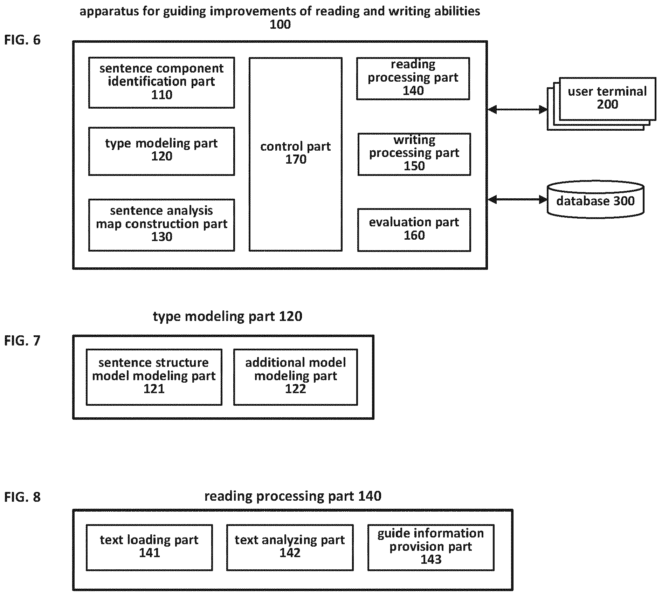

FIG. 6 is a block diagram specifically illustrating a configuration of an apparatus for guiding improvements of reading comprehension and writing composition abilities according to one embodiment of the present disclosure.

As shown in FIG. 6, the apparatus for guiding improvements of reading comprehension and writing composition 100 comprises a sentence component identification part 110, a type modeling part 120, a sentence analysis map construction part 130, a reading processing part 140, a writing processing part150, an evaluation part 160, and a control part 170.

The sentence component identification part 110 is configured to define the components of each sentence in any text that is in the form of a descriptive writing for delivering information or an editorial writing for arguing with demonstration. For example, in the present disclosure, the sentence is defined to one of three components classified into a premise and a subject in a superstructure and a support in a substructure.

The type modeling part 120 is configured to model in advance types of a structure for a single sentence or connection structures for at least more than two sentences into 14 sentence structure models based on the basic components of the sentence defined in the sentence component identification part 110 and store the types modeled into 14 sentence structure models in a database 300.

The type modeling part 120 is further configured to classify users performing reading comprehension or writing composition into respective levels based on age or ability, model compressed types for each of the classified levels and store the compact types. For example, the type modeling part 120 is configured to compress 14 types of sentence structure model modeled in case of the lowest level into 3 types of sentence structure model comprising 1 type for connecting with a progress type linking word of 'by the way', 1 type for connecting with a reverse type linking word of 'but', and 1 type for connecting with a conclusion type linking word of 'therefore' as shown in FIG. 4, and store the compressed 3 types of the sentence structure models in the database 300.

The sentence analysis map construction part 130 is configured to classify each type modeled through the type modeling part 120 with reference to the sentence analysis model, construct a map as shown in FIG. 3, store and manage the constructed map in the database 300.

The reading processing part 140 is configured to read a predetermined text according to the reading selection (i.e., a button or a menu) by a user terminal 200, analyze the text to be provided to the user terminal 200 according to each modeled type in the map constructed by the sentence analysis map construction part 130, and provide the results of the analysis along with the original text to the user terminal 200, so that it enables the user to correct errors of incorrect reading comprehension of the text and to practice precise reading comprehension of the text.

Furthermore, when a user who selects the reading comprehension practice enters a specific subject in the state that the texts required for the reading comprehension are stored as big data, the reading processing part 140 is configured to derive at least one or more texts related to the corresponding subject and provide the derived text to the user, and then when the user selects any text of the at least one or more texts derived according to the subject entered by the user, the reading processing part 140 is configured to analyze the text selected by the user and provide the results of the analysis along with the original texts to the user terminal 200, so that enabling the user to practice the reading comprehension.

The writing processing part 150 is configured to transmit a predetermined topic to the user terminal 200 based on the selection of the writing from the user terminal 200. And upon receipt of the writing content written according to the predetermined topic from the user terminal 200, the writing processing part 150 is configured to analyze the writing content according to each modeled type in the map constructed by the sentence analysis map construction part 130 and provide the results of the analysis to the user terminal 200, so that enabling the user to practice the writing composition.

Furthermore, the writing processing part 150 is configured to store the content of the writing produced by each user according to a particular topic and the results of the analysis of the writing separately for each user in the database 300, so that allowing each user performing the writing to easily determine the extent to which each user has improved his writing skill.

In other words, the reading processing part 140 and the writing processing part 150 are configured to take roles to guide to learn the styles of logic deployment methods of deduction, induction, and dialectics by analyzing the content of the user's writing text according to a specific topic or any form of texts regarding descriptive writing and editorial writing required for reading comprehension according to each modeled type in the map constructed in the sentence analysis map construction part 130.

The evaluating part 160 is configured to generate assessment questions to verify the abilities for reading comprehension and writing composition at predetermined intervals, provide the generated assessment questions to the user terminal 200, evaluate the abilities of the user for the reading comprehension and writing composition by scoring the answers received from the user terminal 200, and store and manage the evaluation results in the database 300.

Wherein, the answers submitted by each user are provided to and scored by experts contracted with the apparatus for guiding improvements of reading comprehension and writing composition 100, based on assessments conducted at predetermined intervals.

In addition, the evaluating part 160 is configured to adjust the level of the reading comprehension or writing composition for each user based on the evaluation results.

The control part 170 is a processor that collectively controls operations of the respective parts of the apparatus for guiding improvements of reading comprehension and writing composition 100.

FIG. 7 is a block diagram illustrating a configuration of a type modeling part according to one embodiment of the present invention.

As shown in FIG. 7, the type modeling part 120 comprises a sentence structure model modeling part 121 and an additional model modeling part 122.

As described with reference to FIG. 3, the sentence structure model modeling part 121 is configured to model types of a structure for a single sentence or connection structures for at least more than two sentences into 14 types and store the modeled types, thereby supporting each user to practice reading comprehension or writing composition.

The sentence structure model modeling part 121 is configured to model the 14 types of 1-stage sentence text, 2-stage sentence text and 3-stage sentence text into 3 compressed types of 2-stage sentence text as shown in FIG. 4 (that is, 1 type connected by a progress type linking word of 'by the way', another 1 type connected by a reverse type linking word of `but, and the other 1 type connected by a conclusion type linking word of 'therefore'), and store the 3 compressed types.

As described with reference to FIG. 5, the additional model modeling part 122 is configured to model and store 2 types, one type connected by a linking word not included in each of 14 types for the sentence structure model and the other type for a content not related to the sentence structure model.

Herein, the addition type model modeled through the additional model modeling part 122 is used for both reading comprehension and writing composition.

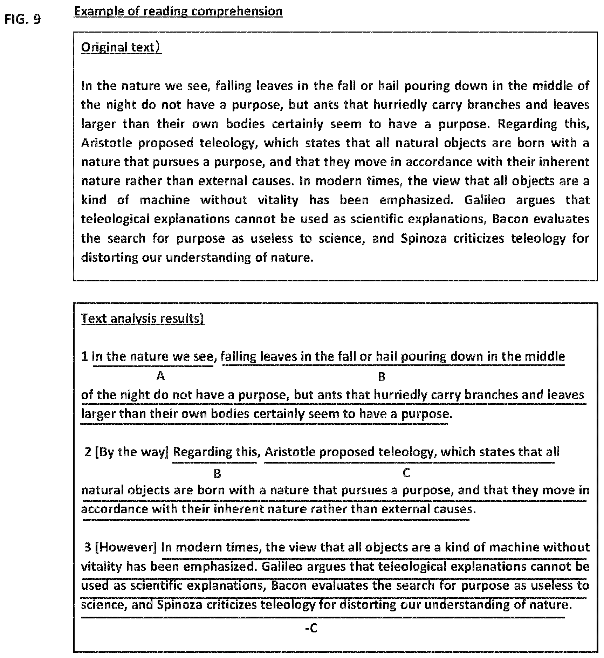

FIG. 8 is a block diagram illustrating in detail a configuration of a reading processing part according to one embodiment of the present disclosure, and FIG. 9 shows an example of an original text and its analysis result provided to a user terminal performing a reading comprehension, which are applied to the present disclosure.

As shown in FIG. 8, the reading processing part 140 comprises a text loading part 141, a text analyzing part 142, and a guide information provision part 143.

When the reading (i.e., a button or a menu) is selected from the user terminal 200, the text loading part 141 is configured to load a text of descriptive writing or editorial writing to be provided to the user terminal 200 from the database 300 and output the loaded text to the text analyzing part 142.

The text analyzing part 142 is configured to analyze the text loaded by the text loading part 141 according to each modeled type and sentence analysis map and output the analyzed result to the guide information provision part 143.

More specifically, when the reading is selected from the user terminal 200 in which a user has performed a login, the text analyzing part 142 is configured to read the text used for the reading comprehension from the database 300. At this time, the loaded text is a text that has not been previously provided to the corresponding user.

In addition, the text analyzing part 142 is configured to divide the text that is read into each sentence, divide each of the divided sentences into unit components, extract keywords and store the extracted keywords. If the divided sentence is in the form of a compound sentence, even if the divided sentence is a 2-stage sentence text, if the divided sentence is in the form of a 1-stage sentence text, it is determined to be a 1-stage sentence text (all sentences in the form of a compound sentence are 1-stage sentence text). When deriving the keywords, various methods, such as natural language analysis or excluding a particle from each syllable, are applied for detecting the keywords in the present disclosure.

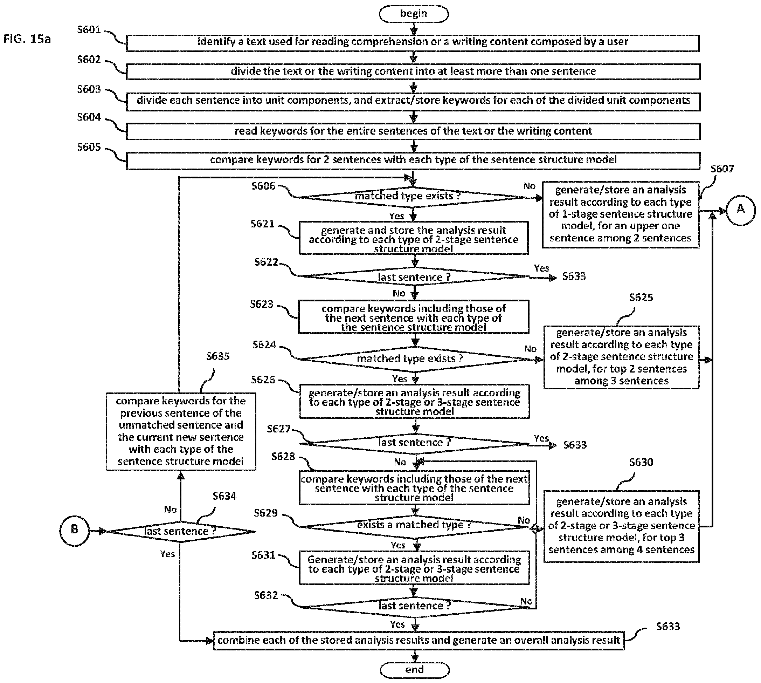

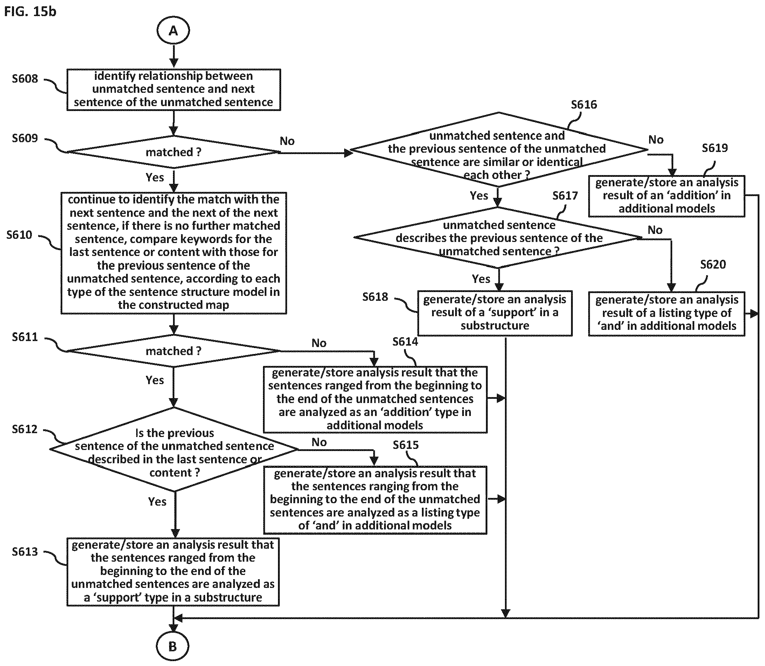

In addition, the text analyzing part 142 is configured to read keywords for the extracted and stored entire sentence, compare the keywords between each of the read sentences with each type of a sentence structure model in the map constructed by the sentence analysis map construction part 130, and sequentially identify whether there is a matched type until the last sentence. When the matched type exists in the result of the identification, the sentence is analyzed with a superstructure, and if the matched type does not exist, the sentence is analyzed with an addition type model of the superstructure or a substructure, so that enabling a user to be guided for the reading comprehension. More specifically, if the matched type does not exist in the result of the identification, generate analysis results comprising a superstructure, a substructure, or a combination thereof comprising a 1-stage sentence text, each type of additional models, or a combination thereof, if the matched type exists in the result of the identification, generate analysis results for the superstructure comprising each type of the sentence structure model for 2-stage sentence text or 3-stage sentence text, and thereby performing the analysis of reading comprehension by dividing the inputted predetermined text into a superstructure and a substructure (Referring to FIG. 15).

The guide information provision part 143 is configured to generate guide information based on the results analyzed in the text analyzing part 142, provide the generated guide information along with the original text to the user terminal 200, so that enabling the corresponding user to learn the styles of logic deployment methods of deduction, induction, and dialectics.

That is, as shown in FIG. 9, the guide information provision part 143 is configured to provide the original text and the text analysis result (i.e. the guide information) to the user terminal 200, so that enabling the user to correct errors in misreading and practice accurate reading comprehension.

Along with the original text, the text analysis result provided to the user terminal 200 is provided in the form of overlaying types for connection structures between each of sentences of the text.

Also, the original text and the text analysis result provided to the user terminal 200 is displayed simultaneously on the screen of the user terminal 200. But in consideration of the efficiency of practicing reading comprehension, the original text is provided first, and thus enabling the user to read the text while identifying the type of the text. And then, the text analysis result is provided after a predetermined time has passed. It is possible to correct errors in wrong reading comprehension and to practice accurate reading comprehension, by comparing and judging whether the type that the user identifies from the original text matches to the text analysis result.

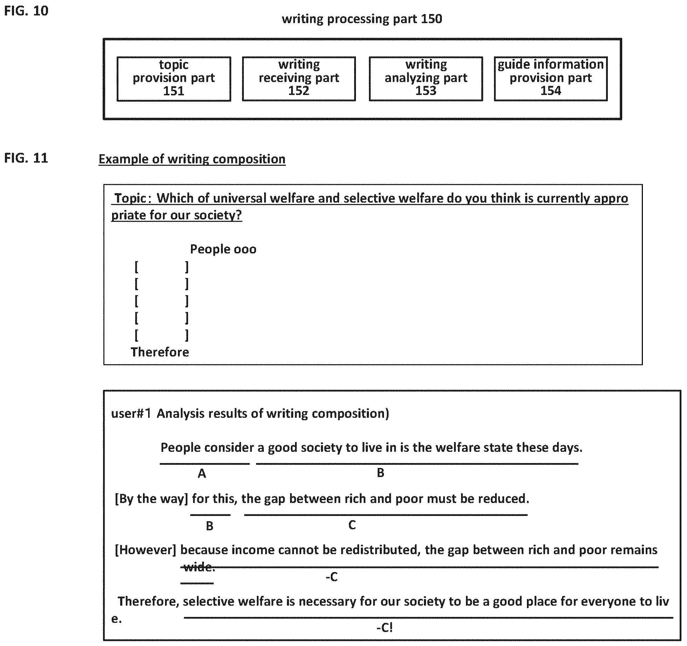

FIG. 10 is a detailed block diagram illustrating a configuration of a writing processing part according to one embodiment of the present disclosure, and FIG. 11 is a drawing showing examples for a topic provided to a user terminal and an analysis result of a text composed by a user according to the topic, which are applied to the present disclosure.

As shown in FIG. 10, the writing processing part 150 comprises a topic provision part 151, a writing receiving part 152, a writing analyzing part 153, and a guide information provision part 154.

When writing is selected in the user terminal 200, the topic provision part 151 is configured to load a specific topic to be used in the writing from the database 300 and transmit the loaded specific topic to the user terminal 200.

The writing receiving part 152 is configured to receive a writing content of a text composed step-by-step by the user according to the specific topic from the user terminal 200, which has been provided with a specific topic from the topic provision part 151 and output the received writing content of the text to the writing analyzing part 153.

The writing analyzing part 153 is configured to analyze the writing content of the text received from the writing receiving part 152 according to each modeled type and sentence analysis map and output the analysis result to the guide information provision part 154.

More specifically, when a writing is selected in the user terminal 200 in which a user has performed a login, the writing analyzing part 153 is configured to load a specific topic from the database 300 and send the topic to the user terminal 200. The specific topic being loaded should be one that has not been previously provided to the user.

In addition, when the writing content of the text composed step-by-step by the user according to the specific topic is received from the user terminal 200, the writing analyzing part 153 is configured to divide the received writing content of the text into each of sentences, divide each of the divided sentences into unit components, extract the keywords from the unit components and store the extracted keywords.

Then, the writing analyzing part 153 is configured to read keywords for the extracted and stored entire sentences, then compare the keywords between each of the read sentences with each type of sentence structure models in a map constructed by the sentence analysis map construction part 130, and sequentially identify whether there exists a matched type until the last sentence. When the matched type exists in the result of the identification, the corresponding sentence is analyzed as a superstructure, and if the matched type does not exist, the sentence is analyzed as addition model of the superstructure or a substructure, so that enabling the writing to be guided. More specifically, if the matched type does not exist in the result of the identification, the writing analyzing part 153 is configured to generate an analysis result comprising the superstructure, substructure, or a combination thereof comprising a 1-stage sentence text, each type of an additional model, or a combination thereof. If the matched type exists in the result of the identification, the writing analyzing part 153 is configured to generate an analysis result for a superstructure comprising each type of sentence structure models for 2-stage sentence text or 3-stage sentence text, and thereby performing the analysis of the writing by dividing the inputted predetermined text into a superstructure and a substructure (Referring to FIG. 15).

As shown in FIG. 11, based on the analysis result produced by the writing analyzing part 153, the guide information provision part 154 is configured to generate an analysis result (i.e., guide information) for the text written by the user according to the specific topic. In other words, the guide information provision part 154 is configured to generate the guide information indicating whether the writing content of the text is suitable for each type of the sentence structure model modeled in advance, or whether the writing content of the text is incorrectly written text that does not correspond to each type of the sentence structure model modeled in advance.

In addition, the guide information provision part 154 is configured to provide the generated guide information to the user terminal 200, so that enabling the user to practice the writing by modifying or rewriting the writing content of the text composed by the user.

In this case, the guide information for the writing provided from the guide information provision part 154 to the user terminal 200 is provided in the form of overlaying types of connection structures between each of sentences in the writing text.

The guide information provision part 154 is also configured to generate and provide the information about where an error is, the information corrected for error in writing content of the text, in addition to the information about the analytics for each type (i.e., the types of A, B, C, -C, and C! in a drawing) of the text.

Meanwhile, the apparatus for guiding improvements of reading comprehension and writing composition 100 in accordance with the present invention is configured to utilize an artificial intelligence when analyzing the text used for reading comprehension or the writing content of the text composed by the user according to each type of the sentence structure model and the sentence analysis map built in advance.

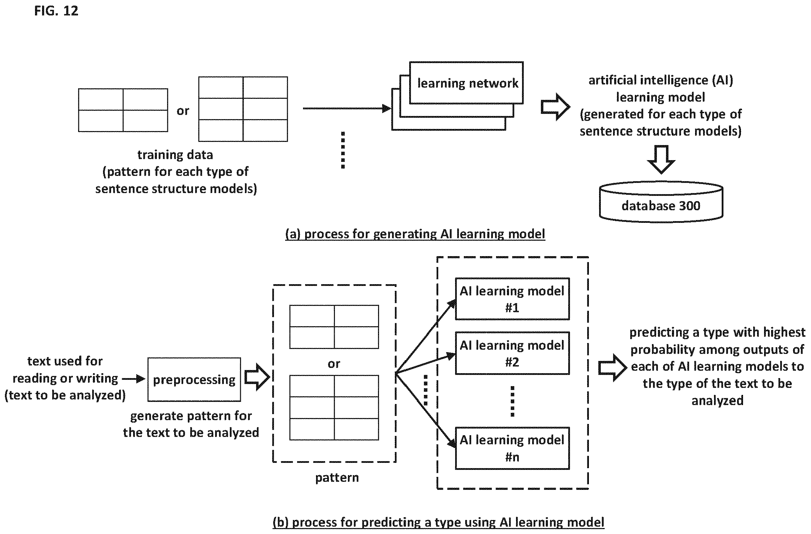

FIG. 12 is a drawing illustrating an example of predicting each type of the sentence structure model using artificial intelligence applied to the present invention when guiding improvements of abilities for reading comprehension or writing composition.

As shown in FIG. 12 (a), the apparatus for guiding improvements of reading comprehension and writing composition 100 is configured to train a pattern for each type of the sentence structure model for the 2-stage sentence and 3-stage sentence texts, generate an artificial intelligence learning model for each type of the sentence structure model shown in FIG. 3, and store the generated artificial intelligence learning model in the database 300.

The training data used for the training is configured to divide each sentence of 2-stage sentence text and 3-stage sentence text into two of unit components, assign each value according to the same, similar, or opposite keywords extracted from each unit component, like an image with pixel values. For example, the same value is given to the same keywords for each unit component, similar values within a predetermined range are given to the similar keywords, and the values corresponding to black and white pixel values as in an image are given to the opposite keywords.

In addition, as shown in FIG. 12 (b), when a text used for reading comprehension or a writing content of a text composed by a user is inputted as a target sentence to be analyzed, the apparatus for guiding improvements of reading comprehension and writing composition 100 is configured to divide the target 2-stage sentence text or 3-stage sentence text into two of unit components through preprocessing, and generate a pattern for the target sentence to be analyzed according to the same, similar, or opposite of the keywords extracted from each unit component.

Subsequently, the apparatus for guiding improvements of reading comprehension and writing composition 100 is configured to input the generated pattern into each artificial intelligence learning model according to each type of the sentence structure model built in advance and predict the type with the highest probability among the results output from each artificial intelligence learning model as the type for the target sentence to be analyzed. Then, the apparatus for guiding improvements of reading comprehension and writing composition 100 is configured to analyze the target sentence to be analyzed according to the predicted type, generate guide information about the text used for reading comprehension or the writing content of the text composed by the user based on the results of the analysis and provide the generated guide information to the user terminal 200.

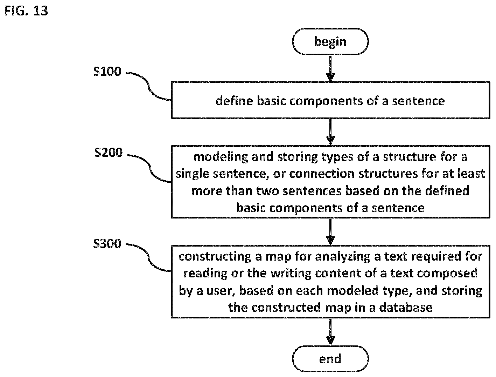

Next, a method for guiding improvements of abilities for reading comprehension or writing composition according to the present invention is described in detail with reference to FIGS. 13 to 15b. Herein, each of the processes according to the method of the present invention can be changed in order by a usage environment or a person skilled in the art.

FIG. 13 is a flowchart showing a process of constructing a program structure map used in the apparatus for guiding improvements of reading comprehension or writing composition abilities according to one embodiment of the present disclosure.

As shown in FIG. 13, the apparatus for guiding improvements of reading comprehension and writing composition 100 is configured to define, in S 100, basic components of each sentence for all texts related to the descriptive writing and editorial writing, and perform, in S200, a type modeling by modeling and storing types of a structure for a single sentence, or connection structures for at least more than two sentences based on the defined basic components of a sentence.

As described above, in the type modeling, the types for the connection structure between sentences are classified and differently modeled into the entire types and the additional types, or the basic types and the additional types according to the age or ability of the user who performs the reading comprehension and writing composition.

As described above with reference to FIG. 6, in the type modeling, the types are modeled by classifying users performing reading comprehension or writing composition into each of different levels based on age or ability and modelling, by compressing, each type of connection structure between sentences for each of the classified levels.

The apparatus for guiding improvements of reading comprehension and writing composition 100 is configured to perform constructing, in S300, a sentence analysis map for analyzing the text required for reading comprehension or the writing content of the text composed by the user, based on each type modeled through S200, and storing the constructed sentence analysis map in the database 300.

After constructing and storing the map based on each type of a structure for a single sentence, or connection structures for at least more than two sentences through 5100 to S300, he apparatus for guiding improvements of reading comprehension and writing composition 100 is configured to apply the configured map to reading comprehension and writing composition and proceed practicing the reading comprehension and writing composition for each user. In other words, the apparatus 100 is configured to analyze the text required for reading comprehension and the writing content of the text composed by the user according to each type of the constructed map and the sentence analysis map and guide the user for reading comprehension and writing composition, and thus enable each user to improve the abilities of reading comprehension and writing composition.

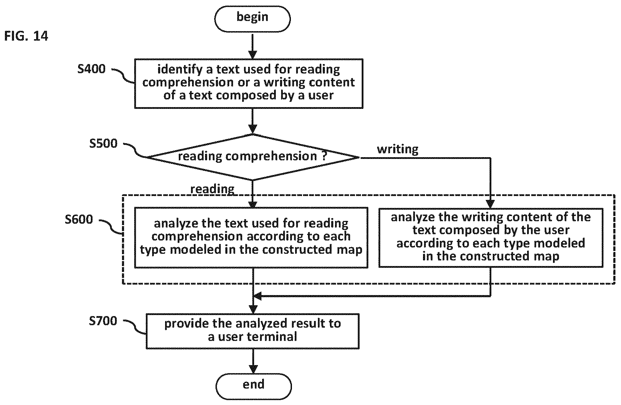

The above process is described in detail with reference to FIGS. 14, 15.

FIG. 14 is a flowchart illustrating an operational process of a method for guiding improvements of reading comprehension and writing composition abilities according to one embodiment of the present invention, and FIG. 15 is a flowchart illustrating in detail an analysis process for reading comprehension and writing composition according to one embodiment of the present invention.

As shown in FIG. 14, the apparatus for guiding improvements of reading comprehension and writing composition 100 is configured to identify, in S400, a text used for reading comprehension or a writing content of a text composed by a user, according to the selection of reading comprehension or writing composition by the user, and determine, in S500, whether the text is used for reading comprehension or a writing content composed by a user, as a result of the identification.

If the text is used for reading comprehension as a result of the determination in S500, the apparatus for guiding improvements of reading comprehension and writing composition 100 is configured to analyze, in S600, the text loaded from the database 300 according to each type of the sentence structure model in the map constructed in S300, and if the text is a writing content of a text composed by a user, the apparatus 100 is configured to analyze, in S600, the writing content of the text according to each type of the sentence structure model in the map constructed in S300.

S600 is described in detail by referring to FIG. 15, wherein the apparatus for guiding improvements of reading comprehension and writing composition 100 is configured to read, in S601, a descriptive text or editorial text used for reading comprehension or a writing content of a text composed by a user based on a specific topic, and divide, in S602, the read text or the writing content of the text into at least more than one sentence.

In addition, the apparatus for guiding improvements of reading comprehension and writing composition 100 is configured to divide, in S603, each sentence read through S602 into unit components, extract keywords for each divided unit component, and store the extracted keywords in the database 300. For example, each of the sentences is divided into two components of a main (independent) clause and a subordinate (dependent) clause, and then a representative keyword for each component is extracted and stored.

After extracting and storing a keyword for the unit component of each sentence through S603, the apparatus for guiding improvements of reading comprehension and writing composition 100 is configured to read, in S604, the keywords for the entire sentences of the read text or the writing content of the text stored in the database 300.

In addition, the apparatus for guiding improvements of reading comprehension and writing composition 100 is configured to compare, in S605, the structure of the keywords for each unit component of the two unprocessed sentences starting from the highest sentence among the keywords for the entire sentences read in S604 with each type of sentence structure model in the map constructed in S300, and determine, in S606, whether a matched type exists as the result of the comparison.

If the type of sentence structure model that matches the structure of the keyword for each unit component of the two sentences does not exist as a result of the determination of S606, the apparatus for guiding improvements of reading comprehension and writing composition 100 is configured to generate and store, in S607, an analysis result according to each type of the sentence structure model of a 1-stage sentence text for the upper one sentence among the two sentences, then identify, in S608, the relationship between a no matched sentence and a next sentence of the no matched sentence, and determine, in S609, whether the result of the identification is matched.

If a match is found in the result of the determination of S609, the apparatus for guiding improvements of reading comprehension and writing composition 100 is configured to continue, in S610, to identify the match with the next sentence and the next of the next sentence, and if no more sentence with match is found, the apparatus 100 is configured to compare the keywords for the last sentence or content and the previous sentence of the sentence that did not match with each type of the sentence structure model in the constructed map, and then determine, in S611, whether there exists a match in the comparison result.

If a match is found in the result of the determination of S611, the apparatus for guiding improvements of reading comprehension and writing composition 100 is configured to determine, in S612, whether the sentence or content in the end describes the previous sentence of the unmatched sentence, if the sentence or content in the end describes the previous sentence of the unmatched sentence as the result of the determination of S612, generate and store, in S613, an analysis result that the sentences ranged from the beginning to the end of the unmatched sentences are analyzed as a 'support' type in the substructure, and then determine, in S634, whether reaching the last sentence.

In addition, if a match is not found in the result of the determination of S611, the apparatus for guiding improvements of reading comprehension and writing composition 100 is configured to generate and store, in S614, an analysis result that the sentences ranged from the beginning to the end of the unmatched sentences are analyzed as 'addition' type in the additional model, and then determine, in S634, whether reaching the last sentence.

Unless the sentence or content in the end describes the previous sentence of the unmatched sentence, as a result of the determination of S612, the apparatus for guiding improvements of reading comprehension and writing composition 100 is configured to generate and store, in S615, an analysis result that the sentences ranging from the beginning to the end of the unmatched sentences are analyzed as a listing type of 'and' in the additional model, and then determine, in S634, whether reaching the last sentence.

Meanwhile, if a match is not found in the result of the determination of S609, the apparatus for guiding improvements of reading comprehension and writing composition 100 is configured to determine, in S616, whether the two sentences, the unmatched sentence and the previous sentence of the unmatched sentence, are similar or identical each other.

If the two sentences, the unmatched sentence and the previous sentence of the unmatched sentence, are similar or identical each other, as a result of the determination of S616, the apparatus for guiding improvements of reading comprehension and writing composition 100 is configured to determine, in S617, whether the unmatched sentence describes the previous sentence of the unmatched sentence, and if the unmatched sentence describes the previous sentence of the unmatched sentence, generate and store, in S618, an analysis result of a 'support' in the substructure, and then determine, in S634, whether reaching the last sentence.

In addition, if the two sentences, the unmatched sentence and the previous sentence of the unmatched sentence, are not similar or identical each other, as a result of the determination of S616, the apparatus for guiding improvements of reading comprehension and writing composition 100 is configured to generate and store, in S619, an analysis result of an `addition' in the additional model, and then determine, in S634, whether reaching the last sentence.

In addition, if the unmatched sentence does not describe the previous sentence of the unmatched sentence, as a result of the determination of S617, the apparatus for guiding improvements of reading comprehension and writing composition 100 is configured to generate and store, in S620, an analysis result of a listing type of 'and' in the additional model, and then determine, in S634, whether reaching the last sentence.

Meanwhile, if there exists a type of sentence structure model that matches the structure of the keyword for each unit component of the two sentences, as a result of the determination of S606, the apparatus for guiding improvements of reading comprehension and writing composition 100 is configured to generate and store, in S621, an analysis result according to the type of the sentence structure model of the 2-stage sentence text, and then determine, in S622, whether reaching the last sentence.

If the last sentence is found in the result of the determination of S622, the apparatus for guiding improvements of reading comprehension and writing composition 100 is configured to combine, in S633, the results of the analysis according to each type of sentence structure model and each type of additional model and generate an analysis result for the entire sentences.

On the other hand, if the last sentence is not found in the result of the determination of S622, the apparatus for guiding improvements of reading comprehension and writing composition 100 is configured to compares, in S623, including the structure of the keywords for each unit component of the next sentence for the two sentences compared in S605 with each type of the sentence structure model in the map constructed in S300, and determine, in S624, whether a matched type exists in the result of the comparison of S623.

If there is no type of sentence structure model that matches the structure of the keyword for each unit component of the three sentences as a result of the determination of S624, the apparatus for guiding improvements of reading comprehension and writing composition 100 is configured to generate and store, in S625, an analysis result according to each type of the sentence structure model in the 2-stage sentence text for the top two sentences of the 3 sentences compared in S623, and then identify, in S608, the relationship between the unmatched sentence to the next sentence of the unmatched sentence.

On the other hand, if there exists a type of sentence structure model that matches the structure of the keyword for each unit component of the 3 sentences, as a result of the determination of S624, the apparatus for guiding improvements of reading comprehension and writing composition 100 is configured to generate and store, in S626, an analysis result according to each type of 2-stage sentence or 3-stage sentence structure model for the 3 sentences compared in S623, and then determine, S627, whether reaching the last sentence.

If it is the last sentence, as a result of the determination of S627, the apparatus for guiding improvements of reading comprehension and writing composition 100 is configured to combine, in S633, the results of the analysis according to each type of sentence structure model and each type of additional model and generate an analysis result for the entire sentences.

On the other hand, if it is not the last sentence as a result of the determination of S627, the apparatus for guiding improvements of reading comprehension and writing composition 100 is configured to compare, in S628, including the structure of the keywords for each unit component of the next sentence for the three sentences compared in S623 with each type of the sentence structure model in the map constructed in S300, and then determine, in S629, whether a matched type exists in the result of the comparison of S628.

If there is no type of sentence structure model that matches the structure of the keyword for each unit component of the 4 sentences as a result of the determination of S629, the apparatus for guiding improvements of reading comprehension and writing composition 100 is configured to generate and store, in S630, an analysis result according to each type of 2-stage sentence or 3-stage sentence structure model for the top 3 sentences of the 4 sentences compared in S628, and then identify, in S608, the relationship between the unmatched sentence and the next sentence of the unmatched sentence.

On the other hand, if there is a type of sentence structure model that matches the structure of the keyword for each unit component of the 4 sentences as a result of the determination of S629, the apparatus for guiding improvements of reading comprehension and writing composition 100 is configured to generate and store, in S631, an analysis result according to each type of 2-stage sentence or 3-stage sentence structure model for the sentence compared in S628, and then determine, in S632, whether reaching the last sentence.

If it is not the last sentence as a result of the determination of S632, the apparatus for guiding improvements of reading comprehension and writing composition 100 is configured to repeatedly perform S628, and if it is the last sentence, the apparatus for guiding improvements of reading comprehension and writing composition 100 is configured to combine the analysis results of each type of sentence structure model and each type of additional model generated respectively in S607, S613, S614, S615, S618, S619, S620, S621, S625, S626, S630, and S631 for the text used for reading comprehension or for the writing content of the text composed by the user, and generate an analysis result for the entire sentences in S633.

Meanwhile, the apparatus for guiding improvements of reading comprehension and writing composition 100 is configured to determine whether it is the last sentence in S634, after performing S613, S614, S615, S618, S619 and S620, if it is not the last sentence as the result of the determination, compare the keywords for the previous sentence of the unmatched sentence and the current new sentence with each type of the sentence structure model in S635, and repeat onwards from S606.

On the other hand, if it is the last sentence as a result of the determination of S634, the apparatus for guiding improvements of reading comprehension and writing composition 100 is configured to perform S633, which combines the results of the analysis according to each type of sentence structure model and each type of additional model and generates an analysis result for the entire sentences.

Referring back to FIG. 14, the apparatus for guiding improvements of reading comprehension and writing composition 100 is configured to generate guide information based on the result of analyzing the entire sentences of the text used for reading comprehension or the writing content of the text composed by the user according to each type of sentence structure model through S600, provide, in S700, the generated guide information to the user terminal 200 so that enabling the user to practice reading comprehension or writing composition.

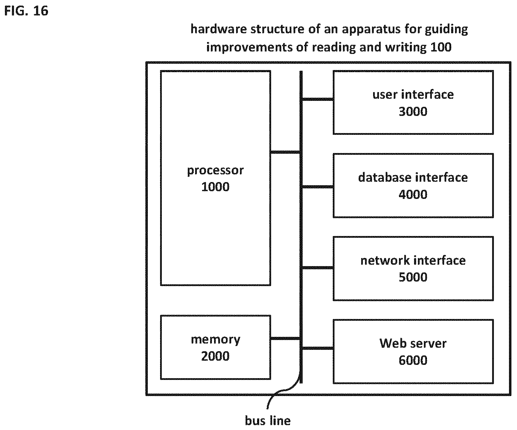

FIG. 16 is a diagram illustrating a hardware structure of the apparatus for guiding improvements of reading comprehension or writing composition abilities according to one embodiment of the present invention.

As shown in FIG. 16, the hardware structure of the apparatus for guiding improvements of reading comprehension and writing composition 100 comprises a processor 1000, a memory 2000, a user interface 3000, a database interface 4000, a network interface 5000, and a web server 6000.

The processor 1000 is configured to divide a type of a structure for a single sentence, or types of connection structures for at least more than two sentences into a superstructure and a substructure, with respect to an inputted predetermined text or a writing text composed by a user, analyze the text with the divided types, and guide the reading comprehension or the writing composition of the text. That is, the processor 1000 is configured to sequentially identify to the last sentence whether there exists a matched type by comparing keywords between each of sentences with each type of the connection structures, with respect to the inputted predetermined text or the writing text composed by the user, and analyze the structure as the superstructure, if the matched type exists, and the structure as an additional model of the superstructure or the substructure, if the matched type does not exist, and thus guide the reading comprehension or the writing composition of the text.

The user interface 3000 is configured to provide an input and an output interface to a user by using a graphical user interface (GUI).

The database interface 4000 is configured to provide an interface between a database and a hardware structure.

The network interface 5000 is configured to provide a network connection between devices connected by a user.

The web server 6000 is configured to provide means for a user to access the hardware structure over a network. Most users remotely access the web server for accessing to the apparatus for guiding improvements of reading comprehension and writing composition 100.

Each component or process of the method described above is implemented as computer-readable code on a computer-readable recording medium or transmitted via a transmission medium. The computer-readable recording medium is a data storage device capable of storing data that can be read by a computer system.

Examples of the computer-readable recording medium comprise a database, a ROM, a RAM, a CD-ROM, a DVD, a magnetic tape, a floppy disk, and an optical data storage device, but are not limited to the above listed media. The transmission medium comprise a carrier transmitted through the Internet or various types of communication channels.

The computer readable recording medium can be distributed over a network coupled computer system such that the computer readable code is stored and executed in a distributed fashion.

In addition, the at least more than one component applied to the present invention comprises a processor, such as a central processing unit (CPU) or microprocessor, which performs the respective functions, or is implemented by the processor, and two or more of the components can be combined into a single component capable of performing all the behaviors or functions of the combined two or more components.

Further, some of the at least one component of the present invention can be performed by other components of these components. Further, communication between the components can be performed through a bus line (not given to an identification number).

As described above, the invention has been described with reference to the embodiments shown in the drawings, but these are exemplary only, and it will be understood by one having ordinary skill in the field to which the present invention belongs that various modifications and equivalent other embodiments are possible from them. Therefore, the scope of technical protection of the present invention should be determined by the accompanied patent claims.

### Industrial Availability

The apparatus according to the present invention is configured to construct a map by modeling the structure of a type of a structure for a single sentence or types of connection structures for at least more than two sentences and apply the constructed map to reading comprehension and writing composition, so that the user can learn styles of logic deployment methods including deduction, induction, and dialectics. Therefore, the user can identify the topic and complete the logical writing by himself without help of others, and greatly improve abilities of the reading comprehension and writing composition.

In addition, the apparatus according to the present invention is the invention is also configured to support learning reading comprehension and writing composition through a map modeled differently for each level set by age or ability, so that each user can improve their abilities through assessment and checking based on their own level of reading comprehension and writing composition, and naturally achieve their learning goals through interactive sentence checks.

## Claims

1. An apparatus for guiding reading or writing comprises: a processor,
wherein the processor is configured to:
divide and analyze a text inputted by a user into a superstructure and a substructure according to types of a structure for a single sentence, or connection structures for at least one or more than two sentences in the text, and
guide the reading or the writing for the text.

2. The apparatus of claim 1,
the processor is further configured to:
sequentially identify a last sentence whether there exists a matched type by comparing a keyword between each of sentences with each type of the connection structures for the at least one or more than two sentences,
analyze a sentence as the superstructure, if a matched type exists, and a sentence as an additional model of the superstructure or the substructure, if a matched type does not exist, and
thereby guide the reading or the writing for the text.

3. The apparatus of claim 1,
wherein the processor comprises:
a type modeling part configured to model the types of the structure of the single sentence or the connection structures for the at least more than two sentences and store the modeled types in advance; and
a sentence analysis map construction part configured to construct a sentence analysis map for analyzing the text according to each of the modeled types.

4. The apparatus of claim 3,
wherein the processor further comprises:
a reading processing part configured to analyze the text according to each of the modeled types and the sentence analysis map, and provide a result of the analysis to a user terminal, and
wherein the reading processing part comprises:
a text analysis part configured to analyze the text according to each of the modeled types and the sentence analysis map; and
a guide information provision part configured to provide guide information to the user terminal along with the original text, and thereby enable a user to correct an error of wrong reading comprehension and practice accurate reading comprehension through learning of styles for logic deployment methods including deduction, induction, and dialectics for the text.

5. The apparatus of claim 4,
wherein the text analysis part is further configured to:
read the text and divide the read text into each of sentences,
divide each of the divided sentences into unit components and extract a keyword from the unit components,
identify sequentially to the last sentence whether there exists the matched type by comparing the keyword between each of the extracted sentences with each of the modeled types,
generate an analysis result comprising a superstructure comprising each type of a 1-stage sentence structure model, an additional model, or a combination thereof, a substructure, or a combination thereof if the matched type does not exist in the result of the identification,
generate an analysis result for the superstructure comprising each type of a 2-stage sentence structure model or a 3-stage sentence structure model if the matched type exists in the result of the identification, and
thereby analyze the reading for the text by dividing the text into the superstructure and the substructure.

6. The apparatus of claim 3,
wherein the processor further comprises:
a writing processing part configured to analyze the writing content of the text composed by the user according to each of the modeled types and the sentence analysis map, and provide the analyzed result to a user terminal, and
wherein the writing processing part comprises:
a writing analyzing part configured to analyze the text received from the user terminal according to each of the modeled types and the sentence analysis map, and
a guide information provision part configured to generate guide information related to the text based on the analyzed result, provide the generated guide information to the user terminal, and thus enable the user to practice the writing through modifying and rewriting of the text.

7. The apparatus of claim 6,
wherein the writing analyzing part is further configured to:
read the text received from the user terminal and divide the read text into each of sentences,
divide each of the divided sentences into unit components and extract a keyword between each of the sentences,
compare the keyword between each of the extracted sentences with each of the modeled types, and identify sequentially to the last sentence whether there exists a matched type,
generate an analysis result comprising a superstructure comprising each type of a 1-stage sentence structure model, an additional model, or a combination thereof, a substructure, or a combination thereof if the matched type does not exist in the result of the identification, generate an analysis result for the superstructure comprising each type of 2-stage sentence structure model or 3-stage sentence structure model if the matched type exists in the result of the identification, and
thereby analyzing the writing for the text by dividing the text into the superstructure and the substructure.

8. The apparatus of claim 3,
wherein the type modeling part is further configured to:
model the types of the structure of the single sentence or the connection structures for the at least more than two sentences into the sentence structure model and the additional model, and store the models in advance,
wherein the sentence structure model is modeled and stored with 14 types of models, in which there are:
1 type in a 1-stage sentence text,
4 types in which a progress type linking word comprising 'by the way' is connected between each of the sentences in the 2-stage sentence text,
3 types in which a reverse type linking word comprising 'but' is connected between each of the sentences in the 2-stage sentence text,
2 types in which a conclusion type linking word comprising 'therefore' is connected between each of the sentences in the 2-stage sentence text,
2 types in which the progress type linking word is connected between a first sentence and a second sentence and a conclusion type linking word is connected between a second sentence and a third sentence in the 3-stage sentence text, and
2 types in which the reverse type linking word is connected between a first sentence and a second sentence and the conclusion type linking word is connected between a second sentence and a third sentence in the 3-stage sentence text,
by referring to the sentence analysis model comprising a subject in a 1-stage sentence text, the progress type, the reverse type, and the conclusion type in the 2-stage sentence text, the progress type and the conclusion type in the 3-stage sentence text, and the reverse type and the conclusion type in the 3-stage sentence text; and
wherein the additional model is modeled and stored with 2 types of models, in which there are one type in which a linking word which is not included in the sentence structure model connects a sentence for backing up to another sentence and the other type in which a content irrelevant to the sentence structure model is added to a sentence.

9. A method for guiding reading or writing comprises:
by a processor, dividing and analyzing a text inputted by a user into a superstructure and a substructure according to types of a structure for a single sentence, or connection structures for at least one or more than two sentences in the text; and
by the processor, guiding the reading or the writing for the text.

10. The method of claim 9, further comprises:
by the processor, sequentially identifying to a last sentence whether there exists a matched type by comparing a keyword between each of sentences with each type of the connection structures for the at least one or more than two sentences, and
by the processor, analyzing the sentence as the superstructure, if the matched type exists, and the sentence as an additional model of the superstructure or the substructure, if the matched type does not exist, and
thereby guiding the reading or the writing for the text.

11. The method of claim 9, further comprises:
by the processor, modeling the types of the structure of the single sentence or the connection structures for the at least more than two sentences and store the modeled types in advance; and
by the processor, constructing a sentence analysis map for analyzing the text according to each of the modeled types.

12. The method of claim 11, further comprises:
by the processor, processing the reading by analyzing the text according to each of the modeled types and the sentence analysis map, and providing a result of the analysis to a user terminal, and
wherein the processing of the reading comprises:
analyzing the text according to each of the modeled types and the sentence analysis map; and
providing guide information to the user terminal along with the text originally inputted, and thereby enabling the user to correct an error of wrong reading comprehension and practice accurate reading comprehension through learning of styles for logic deployment methods including deduction, induction, and dialectics for the text.

13. The method of claim 12,
wherein the analyzing of the text further comprises:
reading the text and dividing the read text into each of sentences,
dividing each of the divided sentences into unit components and extracting a keyword from the unit components,
identifying sequentially to the last sentence whether there exists the matched type by comparing the keyword between each of the extracted sentences with each of the modeled types,
generating an analysis result comprising a superstructure comprising each type of a 1-stage sentence structure model, an additional model, or a combination thereof, a substructure, or a combination thereof if the matched type does not exist in the result of the identification,
generating an analysis result for the superstructure comprising each type of a 2-stage sentence structure model or a 3-stage sentence structure model if the matched type exists in the result of the identification, and
thereby analyzing the reading for the text by dividing the text into the superstructure and the substructure.

14. The method of claim 11, further comprises:
by the processor, processing the writing by analyzing the writing content of the text composed by the user according to each of the modeled types and the sentence analysis map, and providing the analyzed result to a user terminal,
wherein the processing of the writing further comprises:
analyzing the text received from the user terminal according to each of the modeled types and the sentence analysis map, and
generating guide information related to the text based on the analyzed result, providing the generated guide information to the user terminal, and thus enabling the user to practice the writing through modifying and rewriting of the text.

15. The method of claim 14,
wherein the analyzing of the writing further comprises:
reading the text received from the user terminal and dividing the read text into each of sentences,
dividing each of the divided sentences into unit components and extract a keyword between each of the sentences,
comparing the keyword between each of the extracted sentences with each of the modeled types, and identify sequentially to the last sentence whether there exists a matched type,
generating an analysis result comprising a superstructure comprising each type of a 1-stage sentence structure model, an additional model, or a combination thereof, a substructure, or a combination thereof if the matched type does not exist in the result of the identification,
generating an analysis result for the superstructure comprising each type of 2-stage sentence structure model or 3-stage sentence structure model if the matched type exists in the result of the identification, and
thereby analyzing the writing for the text by dividing the text into the superstructure and the substructure.

16. The method of claim 11,
wherein the modeling of the types is further configured to:
model the types of the structure of the single sentence or the connection structures for the at least more than two sentences into the sentence structure model and the additional model, and store the models in advance,
wherein the sentence structure model is modeled and stored with 14 types of models, in which there are:
1 type in a 1-stage sentence text,
4 types in which a progress type linking word comprising 'by the way' is connected between each of the sentences in the 2-stage sentence text,
3 types in which a reverse type linking word comprising 'but' is connected between each of the sentences in the 2-stage sentence text,
2 types in which a conclusion type linking word comprising 'therefore' is connected between each of the sentences in the 2-stage sentence text,
2 types in which the progress type linking word is connected between a first sentence and a second sentence and a conclusion type linking word is connected between a second sentence and a third sentence in the 3-stage sentence text, and
2 types in which the reverse type linking word is connected between a first sentence and a second sentence and the conclusion type linking word is connected between a second sentence and a third sentence in the 3-stage sentence text,
by referring to the sentence analysis model comprising a subject in a 1-stage sentence text, the progress type, the reverse type, and the conclusion type in the 2-stage sentence text, the progress type and the conclusion type in the 3-stage sentence text, and the reverse type and the conclusion type in the 3-stage sentence text; and
wherein the additional model is modeled and stored with 2 types of models, in which there are one type in which a linking word which is not included in the sentence structure model connects a sentence for backing up to another sentence and the other type in which a content irrelevant to the sentence structure model is added to a sentence.
